# EUROPEAN PATENT SPECIFICATION

(11) **EP 1 432 101 B1**
(45) Date of publication and mention of the grant of the patent: **20.03.2019**
(21) Application number: 02256550.1
(22) Date of filing: 20.12.2002
(51) Int. Cl.: H02K 21/02, H02K 7/08, H02K 16/00, H02K 7/12

(54) **Electrical machine with structure for axially moving the rotor using centrifugal force**
Elektrische Maschine mit einer Struktur, um den Rotor mit Hilfe der Fliehkraft in axialer Richtung zu bewegen
Machine électrique avec une structure pour déplacer le rotor axialement grâce aux forces centrifuges

(43) Date of publication of application: 23.06.2004
(60) Divisional application: 18150990.2
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- EP-A- 0 304 974
- DE-C- 710 775
- DE-C- 746 319
- JP-U- S54 167 310
- JP-U- S63 167 377
- US-A1- 2002 093 262

## Description

### BACKGROUND OF THE INVENTION

### (a) Field of the Invention

This rotor axial activation modulation of electric machinery due to centrifugal force is to reveal, between the electric machinery rotating shaft and the electric machinery rotor or between the electric machinery rotor and the housing, or between the electric machinery rotating shaft and the housing, there is installed a centrifugal pulling mechanism FCD100 that can pull the electric machinery rotor to produce axial displacement, and there is installed an axial pre-stressed spring SP100 which exhibit regression during deceleration and optionally there is installed an axial position limiting structure D100 to the electric machinery rotating shaft, such that during the operation of the electric machinery and depending on the speed of the electric machinery rotor, the electric machinery rotor can be pulled to produce corresponding axial displacement ,and further to modulate the electric machinery characteristics with respect to the electro-magnetic field.

### (b) Description of the Prior Art

Among the rotating electric machinery products sold in the market there are electric machinery structures combining the cone shape rotor and cone hole electric machinery magnetic field. When activated the axial electro-magnetic attraction force will drive the axial, normally closed activation mechanism. Its function is to act as the axial driving power source to control the normally closed activation mechanism. However, its electric machinery characteristic remains singular.

EP0304974 discloses an alternator, or synchronous generator, for supplying current to the battery or other apparatus of a car, ship or other means of transport wherein a conical rotor rotates within a housing, with means for adjusting the position of the rotor within the stator for maintaining a constant induced current voltage.

JP S54 167310 discloses a rotatable electric machine comprising a rotatable shaft, a rotor, means for generating an electro-magnetic field, a pulling structure and a pre-stressed spring, whereby the pulling structure comprises at least one weight installed on a pivot joint structure, the pivot joint structure having movable arms pivotally connected together, with one arm connected to a fixing seat fixed to the rotatable shaft, and the other arm connected to a fixing seat fixed to the rotor.

### SUMMARY OF THE INVENTION

A rotatable electric machine according to the present invention comprises: a rotatable shaft, a rotor, means for generating an electro-magnetic field, a housing, a pulling structure, and a pre-stressed spring, wherein the pulling structure comprises at least one weight installed on a pivot joint structure, the pivot joint structure having movable arms pivotally connected together, with one arm connected to a fixing seat fixed to the rotor, the arrangement being such that the or each weight and the arms are movable by the centrifugal force generated by rotation of the rotor whereby the movement of the arms pulls the rotor in the axial direction, and in that the pre-stressed spring is installed on the rotatable shaft between the fixing seats of the rotatable shaft and the rotor, whereby the spring pushes the rotor to its standstill position during deceleration of the rotor, such that, when the rotor functions as a generator or as a motor, the speed of the rotor controls the centrifugal pulling structure so that the centrifugal force varies according to the rotor speed, and further drives the rotor to produce axial displacement along a preset direction, so as to generate corresponding displacement, characterised in that the other arm of the pivot joint structure is connected to a circular washer, the washer being coupled through a bearing to a fixing seat which is fixed to the housing.

### BRIEF DESCRIPTION OF THE DRAWINGS

Fig. 1 shows the cross section illustration of this invention where between the electric machinery rotor and the inner side of the housing there is installed the centrifugal pulling mechanism for the pulling of the electrical machinery rotor to produce axial activation modulation.
Fig.2 is the cross sectional illustration across A-A' in Fig.1.
Fig. 3 shows the cross section illustration of this invention where between the electric machinery rotor and the inner side of the housing there is installed the centrifugal pulling mechanism for the pulling of the rotating shaft of the electrical machinery to produce axial activation modulation.
Fig. 4 shows the cross section illustration of this invention where between the rotating shaft of the electric machinery and the inner side of the housing there is installed the centrifugal pulling mechanism for the pulling of the electrical machinery rotor to produce axial activation modulation.
Fig. 5 shows the cross section illustration of this invention where between the rotating shaft of the electric machinery and the outer housing there is installed the centrifugal pulling mechanism for the pulling of the electrical machinery rotor to produce axial activation modulation.
Fig. 6 shows the cross section illustration of a fourth example for the realization of the dual electric machinery rotor of this invention.
Fig. 7 shows the cross section illustration of a fifth example for the realization of the dual electric machinery rotor of this invention.
Fig. 8 is the cross section illustration where one side between the electric machinery rotor and the common rotating shaft of the electric machinery can be used for the axial displacement modulation, whereas the other side between the electric machinery rotor and the common rotating shaft of the electric machinery is fixed connection.
Fig. 9 shows the cross section illustration of a sixth example for the realization of the dual electric machinery rotor of this invention.
Fig. 10 shows the cross section illustration of a seventh example for the realization of the dual electric machinery rotor of this invention.
Fig. 11 shows the cross section illustration of an eighth example for the realization of the dual electric machinery rotor of this invention.
Fig. 12 shows the cross section illustration of a ninth example for the realization of the dual electric machinery rotor of this invention.
Fig. 13 shows the cross section illustration of the realization example of this invention where the electric machinery rotor is made of axial overlapping rotors of different electric machinery characteristics.
Fig. 14 is the cross section illustration of the realization example of this invention where the electric machinery magnetic field is made of axial overlapping rotors of different electric machinery characteristics.
Fig. 15 is the illustration of the realization example of this invention where the rotating shaft of the electric machinery is coupled to single axial displacement and rotating driving adaptor sleeve.
Fig. 16 is the illustration of the realization example of this invention where the rotating shaft of the electric machinery is coupled to axial bearing with internal surface distribution of ball bearing.
Fig. 17 is the illustration of the realization example of this invention where the rotating shaft of the electric machinery is coupled to outer layer being ball bearing and inner layer being adaptor sleeve for axial displacement.
Fig. 18 is the illustration of the realization example of this invention where the rotating shaft of the electric machinery is coupled with outer layer being rotating bearing whereas inner layer being multi-layer structure constitute of plum-flower shape shaft or key way structure for axial displacement.
Fig. 19 is the illustration of the realization example of this invention where the rotating shaft of the electric machinery coupled with outer layer being rotating bearing whereas inner layer being axial bearing multi-layer structure.
Fig. 20 is the illustration of the realization example of this invention where the rotating shaft of the electric machinery is coupled with outer layer being adaptor sleeve for axial displacement whereas inner layer being multi-layer structure for rotating bearing.
Fig. 21 is the illustration of the realization example of this invention where the rotating shaft of the electric machinery is coupled with outer layer being plum flower type key way structure for axial displacement whereas inner layer being multi-layer structure for rotating bearing.
Fig. 22 is the illustration of the realization example of this invention where the rotating shaft of the electric machinery is coupled with outer layer being axial bearing whereas inner layer being multi-layer structure for rotating bearing.

### DETAILED DESCRIPTION OF THE PREFERRED EMBODIMENTS

This electric machinery modulated by a rotor which is axially activated due to centrifugal force comprises, a centrifugal pulling mechanism FCD100 installed between the electric machinery axis and the electric machinery rotor or between the electric machinery rotor and the housing, or between the electric machinery axis and the housing, that can pull the electric machinery rotor to produce axial displacement, and an axial pre-stressed spring SP100 is installed which exhibits compression during deceleration and optionally an axial position limiting structure D100 is installed on the electric machinery rotor, such that during the operation of the electric machinery and depending on the speed of the rotor, the rotor will be pulled to produce the corresponding axial displacement, and further will modulate the characteristics with the electro-magnetic field; Apart from the housing and bearing of the traditional electric machinery component, its major constituents are:
--Electric machinery magnetic field F100: Including the constituents of DC or AC generators or motors structures; These structures may include:
   F1: Between the poles of the electric machinery magnetic field and the electric machinery rotor of which the electric machinery magnetic field exhibits normal stable even distribution; or
   ectroetween the poles of the electric machinery magnetic field and the electric machinery rotor of which the axial single side or double sides exhibit different electric machinery magnetic field intensity; or
   F3: Between the poles of the electric machinery magnetic field and the electric machinery rotor of which the axial single side or double sides exhibit different gap structures with electric machinery rotor; or
   F4: Between the poles of the electric machinery magnetic field and the electric machinery rotor whose axial single side or double sides consist of multiple permanent magnetic poles or magnetic poles excited by magnetic windings W100 or combinations of both which consist of axial serial structures; or
   F5: The structures formed by two or more of the structures described in F1 through F4;
--The electric machinery rotor R100: Including single or mixed electric machinery rotors consist of various commonly used AC or DC generators or motors such as permanent, salient, hysteresis , wound, brush, turbo, squirrel-cage type AC or DC or brush or brushless, synchronous or asynchronous;
--Centrifugal pulling mechanism FCD100: Including the mechanism consist of commonly used axial pulling structure due to centrifugal force, and with pre-stressed spring SP100 which exhibit regression during deceleration that will pull the rotor to produce corresponding displacement depending on the speed of the electric machinery rotor, which will alter the relative positions between the electric machinery rotor R100 and electric machinery magnetic field F100, which will produce the relative settings between the electric machinery rotor R100 and the electric machinery magnetic field F100.

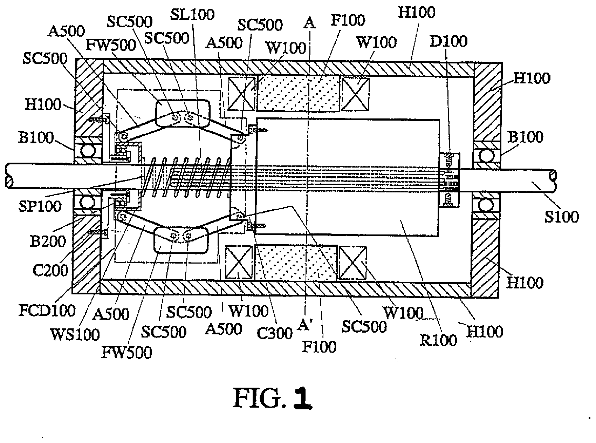

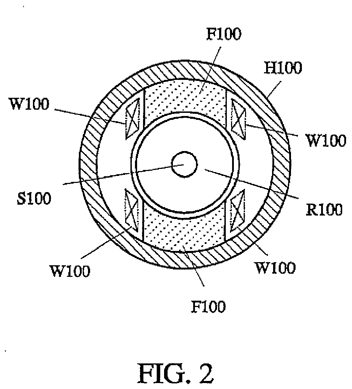

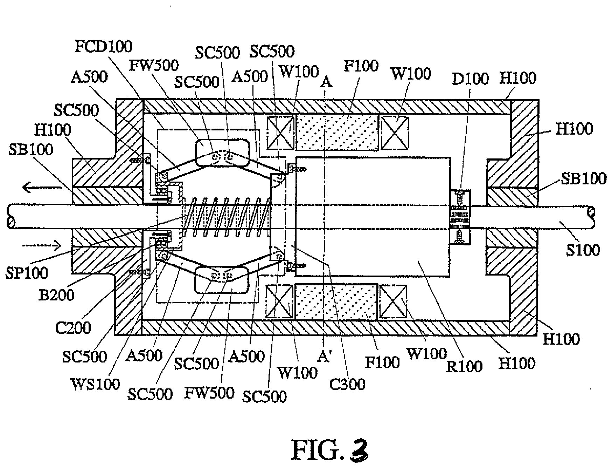

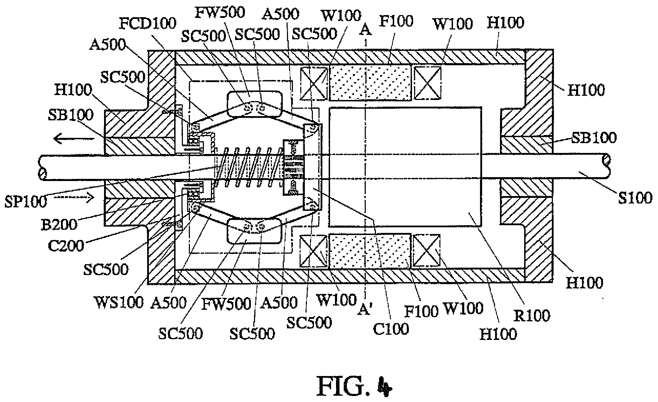

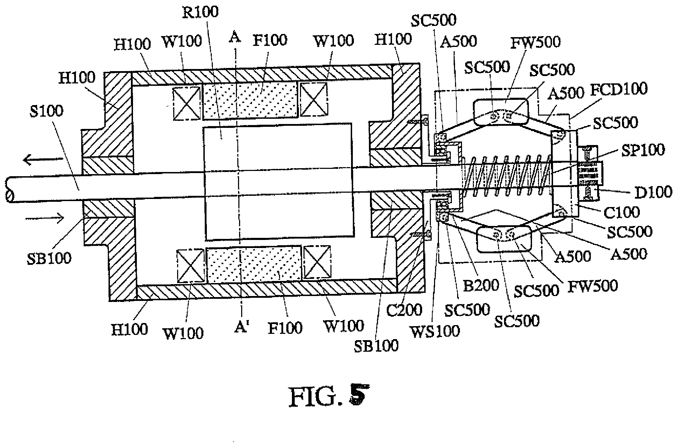

This electrical machinery structure modulated by axially activated rotor by use of centrifugal force includes:
(1) As shown in Fig. 1 is the cross sectional illustration of this invention of which between the electric machinery rotor and inner wall of the housing there is installed the centrifugal pulling mechanism for the pulling of the electric machinery rotor to produce axial activation modulation. The cross sectional view along A-A' is shown in Fig. 2. This electrical machinery which can produce axial activation modulation by the use of centrifugal force, has a centrifugal pulling mechanism FCD100 that is installed between the electric machinery rotor R100 and the housing H100 which can manifest regression coupling and has the function of resisting pulling force along axial direction; and between the electric machinery rotor R100 and the rotating shaft of the electric machinery S100, there is installed a plum-flower-shaped shaft or any other similar key way structure SL100 that can produce axial displacement, or further in between the groove-like linear interactive bodies there is installed a linear ball bearing or roller bearing structure, and on one side of the centrifugal pulling mechanism FCD100 is for the connection to the pivotal joint structure SC500, so as to connect the movable arms A500 on both side, and the movable arm A500 on one side, for connecting to the fixing seat C300 of the electric machinery rotor R100 (or the fixing seat of the body extension of the electric machinery rotor structure) so as to combine with the electric machinery rotor, and the movable arm A500 on the other side for the connection to the circular washer WS100, and the fixing seat C200 coupled through bearing B200 and form regression coupling with the housing H100 and with axial resisting pulling force function; between the washer WS100 of the centrifugal pulling mechanism FCD100 and the fixing seat C300 for the connection to the electric machinery rotor R100, there is stalled a pre-stressed spring SP100 which exhibit regression during deceleration, and to the rotating shaft of the electric machinery there is installed an axial position limiting structure D100, to the rotating shaft of the electric machinery S100 and the housing H100 there is installed the bearing B100 for coupling to the electric machinery rotating shaft S100 for rotating driving, and when the electric machinery rotor R100 and the shaft of the electric machinery S100 are functioning as generator or functioning as motor, its rotating speed will control the speed of the centrifugal pulling mechanism FCD100 and varies the centrifugal force, and further drives the electric machinery rotor R100 to produce axial displacement in the preset direction, and with the electro-magnetic field F100 to produce corresponding settings of the characteristics of the generator or motor; or
(3) As shown in Fig. 3 is the cross sectional illustration of this invention of which between the rotor of the electric machinery and the interior of the housing there is installed the centrifugal pulling mechanism for the pulling of the shaft of the electric machinery to produce axial activation modulation, of which the cross sectional illustration along A-A' is the same as Fig.2; This rotor axial activation modulation of electric machinery due to centrifugal force, by using the centrifugal pulling mechanism FCD100, for the installation in between the electric machinery rotor R100 and the housing H100 and exhibiting rotating coupling and has the function of resisting pulling force along axial direction; whereas the electric machinery rotor R100 combined with the rotating shaft of the electric machinery S100, on the side of the centrifugal pulling mechanism FCD100 for the connection to the pivotal joint structure SC500, to connect the movable arm A500 on both sides, of which the side with the movable arm A500, for the connection to the fixing seat of the electric machinery rotor(or the fixing seat that is body extension of the electric machinery rotor)C300 so as to combine with the electric machinery rotor, whereas the other side is connected to the circular washer WS100 of the pivotal joint structure SC500 through the movable arm A500, and through the bearing B200 coupled to the fixing seat C200 which exhibits rotating coupling and axial resisting force with the housing; between the circular washer WS100 of the centrifugal pulling mechanism FCD100 and the fixing seat C300 for the connection to the electric machinery rotor R100, there is installed an axial pre-stressed spring SP100 that will exhibit regression during deceleration, and to the rotating shaft if the electric machinery there is installed the axial position limiting structure D100, between the rotating shaft of the electric machinery S100 and housing H100 there is installed an adaptor sleeve or bearing SB100 for the coupled rotating shaft of the electric machinery S100 to produce axial displacement and rotating driving, which can be used for the axial position fixing between the adaptor sleeve or bearing SB100 for the axial displacement and rotating driving and the motor shell H100, for the rotating shaft of the electric machinery S100 to produce axial displacement and rotating driving function, so that when the electric machinery rotor R100 and the rotating shaft of the electric machinery S100 are performing generator function operation or motor function operation, depending on the speed of the rotor which controls the centrifugal pulling mechanism FCD100 and varies the centrifugal force, and further to drive the electric machinery rotor to produce axial displacement along the preset direction, and to produce electrical generator or electric motor characteristics with the electric machinery magnetic field F100; or
(4) As shown in Fig. 4 is the cross sectional illustration of this invention of which between the shaft of the electric machinery and inner wall of the motor there is the centrifugal pulling mechanism for pulling the electric machinery rotor to perform axial activation modulation. The cross sectional view along A-A' is the same as Fig. 2. This rotor axial activation modulation of electric machinery due to centrifugal force, in between the rotating shaft S100 of the electric machinery of the electric machinery rotor R100 and the inner wall of the motor H100 there can be installed a centrifugal pulling mechanism, for the pulling of the rotating shaft of the electric machinery S100 to produce axial displacement, in the centrifugal pulling mechanism FCD100 there is installed the centrifugal weight FW500, in the centrifugal weight FW500 there is installed the pivotal joint structure SC500 for the coupling of movable arm A500, of these one of the movable arm A500 is for connecting to the fixing seat C100 and in turn connected to the rotating shaft S100 of the electric machinery, and the movable arm A500 on the other side is for connecting to the circular washer WS100, and through the bearing B200 coupled to the fixing seat C200 installed with pivotal joint SC500 and connected to the inner wall of the motor H100, and enabling between the centrifugal pulling mechanism FCD100 and the housing H100 to exhibit rotating coupling and with axial resisting force function, between the circular washer WS100 installed on the centrifugal pulling mechanism FCD100 and the fixing seat C100 for the connection to the rotor shaft S100 of the electric machinery, there can be installed a pre-stressed spring exhibiting axial regression during deceleration, between the rotating shaft S100 of the electric machinery and the housing H100, there is installed the adaptor sleeve or bearing SB100 for the axial displacement and rotating driving for the coupled rotating shaft SB100 of the electric machinery, which can be used for the axial position fixing between the adaptor sleeve for axial displacement and rotating driving and the bearing SB100 and the housing H100, and simply for the rotating shaft S100 of the electric machinery to perform axial displacement rotating driving function, so that when the electric machinery rotor R100 and the rotating shaft of the electric machinery S100 is performing generator function operation or motor function operation, depending on it's speed, with the help of the centrifugal pulling mechanism FCD100 which varies the centrifugal force and the action of the axial pre-stressed spring SP100, so as to drive the rotating shaft of the electric machinery S100 to produce the axial displacement along the preset direction, and further for the axial pulling of the electric machinery rotor R100 to produce the corresponding settings of the characteristics of electrical generator or electrical motor with the electric machinery magnetic field F100; or
(5) As shown in Fig. 5 is the cross sectional illustration of this invention of which between the electric machinery rotating shaft and outer wall of the motor there is installed the centrifugal pulling mechanism for pulling the electric machinery rotor to perform axial activation modulation. The cross sectional view along A-A' is the same as Fig. 2. This rotor axial activation modulation of electric machinery due to centrifugal force, in between the rotating shaft S100 of the electric machinery exterior to the motor shell H100 of the rotor of the electric machinery R100 and the motor shell H100 there can be installed a centrifugal pulling mechanism FCD100, for the pulling of the rotating shaft of the electric machinery S100 to produce axial displacement, in the centrifugal pulling mechanism FCD100 there is installed the centrifugal weight FW500, in the centrifugal weight FW500 there is installed the pivotal joint structure SC500 for the coupling of movable arm A500, of these one of the movable arm A500 is for connecting to the fixing seat C100 and in turn connected to the rotating shaft S100 of the electric machinery, and the movable arm A500 on the other side is for connecting to the circular washer WS100, and through the bearing B200 coupled to the fixing seat C200 installed with pivotal joint SC500 and connected to the inner wall of the motor H100, and enabling between the centrifugal pulling mechanism FCD100 and the housing H100 to exhibit rotating coupling and with axial resisting force function, of which between the circular washer WS100 installed on the centrifugal pulling mechanism FCD100 and the fixing seat C100 for the connection to the rotor shaft S100 of the electric machinery, there can be installed a pre-stressed spring which is exhibiting axial regression during deceleration, between the rotating shaft S100 of the electric machinery and the housing H100, there is installed the adaptor sleeve or bearing SB100 for the axial displacement and rotating driving for the coupled rotating shaft SB100 of the electric machinery, which can be used for the axial position fixing between the adaptor sleeve or the bearing SB100 for the displacement and the rotating driving and the housing H100, and simply for the rotating shaft S100 of the electric machinery to perform axial displacement rotating driving function, so that when the electric machinery rotor R100 and the rotating shaft of the electric machinery S100 is performing the generator function operation or the motor function operation, depending on its speed, with the help of the centrifugal pulling mechanism FCD100 which varies the centrifugal force and through the action of the axial pre-stressed spring SP100, using the rotating shaft of the electric machinery S100 to produce the axial displacement along the preset direction, and further for the axial pulling of the electric machinery rotor R100 to produce the corresponding settings of the characteristics of generator or motor with the electro-magnetic field F100.

This rotor axial activation modulation of electric machinery due to centrifugal force, can be further modified to the structure of an individual electric machinery magnetic field structure F100 coupled to two individual electric machinery rotors and constitute the dual electric machinery rotor structure; The previously described structures between the dual rotors R100' and R100" and the rotating shaft of the electric machinery can be fixed connection or installed with plum-flower shape shaft, or any other key way structure SL100 which can be used for axial displacement or further in between the groove-like linear interactive bodies there is installed a linear ball bearing or roller bearing structure rotating shaft of electric machinery, including the structure consist of one common electric machinery shaft S100"' or two sections comprising of two separate electric machinery shafts S100' and S100". The previously described structure of two individual electric machinery rotors for the coupling to one each individual electric machinery magnetic field F100, the two individual electric machinery rotors can have either the same characteristics or different electric machinery rotor structures. The characteristics of the two electric machinery magnetic fields coupled by the two electric machinery rotors also can be the same or different characteristics.

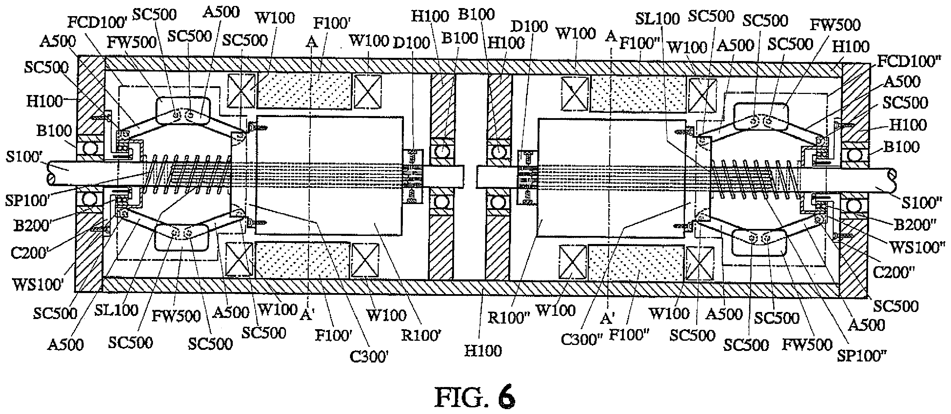

Fig. 6 shows the cross sectional illustration of a fourth example for the realization of the dual electric machinery rotors of this invention. The cross sectional illustration along A-A' is the same as Fig. 2.

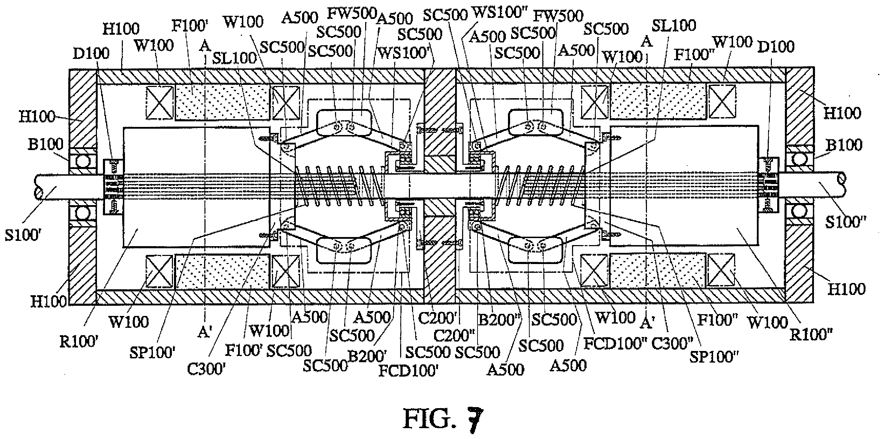

Fig. 7 shows the cross sectional illustration of a fifth example for the realization of the dual electric machinery rotors of this invention. The cross sectional illustration along A-A' is the same as Fig. 2.

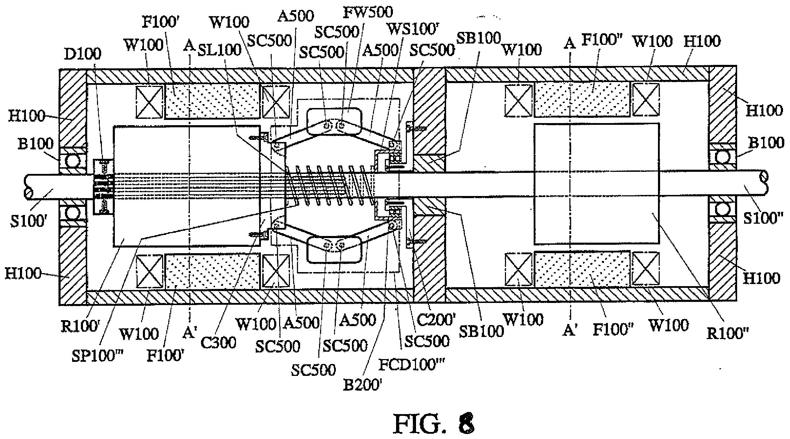

Fig. 8 is the cross sectional illustration in which between one side of the electric machinery rotor and the common rotating shaft of the electric machinery can be used for the axial displacement modulation whereas between the other side of the electric machinery rotor and the common rotating shaft of the electric machinery the connection is fixed. The cross sectional illustration along A-A' is the same as Fig. 2.

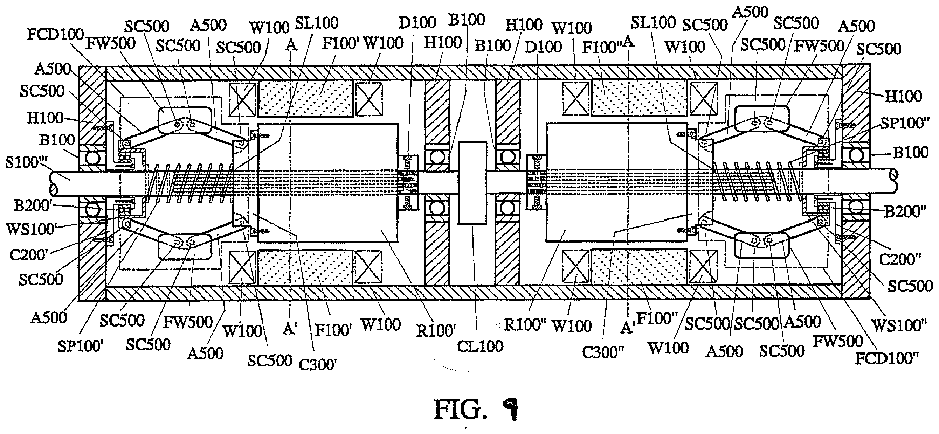

Fig. 9 shows the cross sectional illustration of a sixth example for the realization of the dual electric machinery rotors of this invention. The cross sectional illustration along A-A' is the same as Fig. 2.

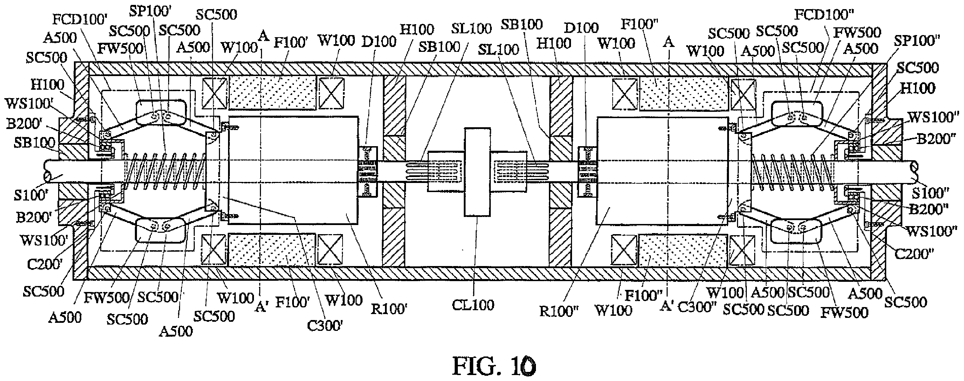

Fig. 10 shows the cross sectional illustration of a seventh example for the realization of the dual electric machinery rotors of this invention. The cross sectional illustration along A-A' is the same as Fig. 2.

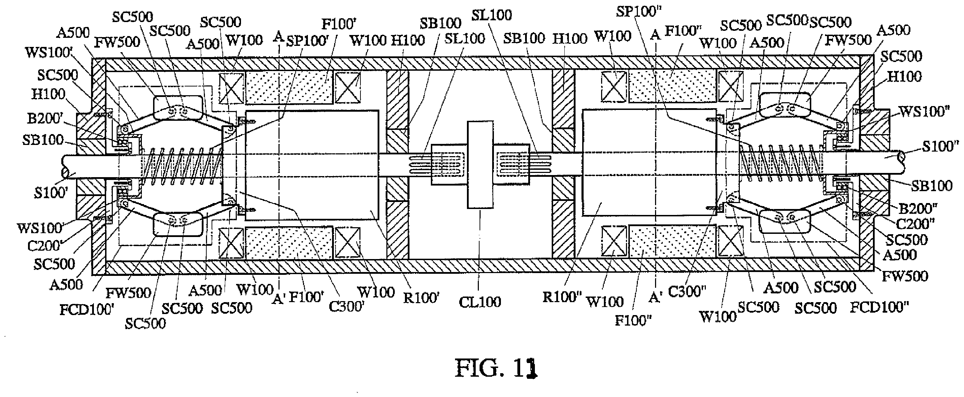

Fig. 11 shows the cross sectional illustration of an eighth example for the realization of the dual electric machinery rotors of this invention. The cross sectional illustration along A-A' is the same as Fig. 2.

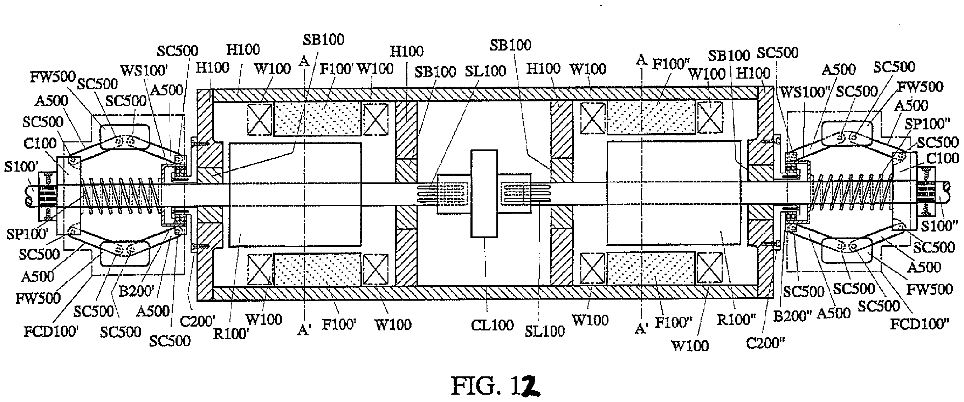

Fig. 12 shows the cross sectional illustration of a ninth example for the realization of the dual electric machinery rotors of this invention. The cross sectional illustration along A-A' is the same as Fig. 2.

As shown in Figs. 6 though 12, it is possible in between the respective rotating shafts S100' and S100" to further selectively install additional electrical, or magnetic, or mechanical, or human, or fluid, or any other operable means of power to control the transmission structure, including frictional or let-in type clutch or centrifugal clutch, etc., for rotary dynamics transmission or breaking function clutches which constituting controllable clutches CL100 such that the two electric machinery rotors can operate jointly or separately.

This rotor axial activation modulation of electric machinery due to centrifugal force whose dual electric machinery rotors structures consist of:
(1) As illustrated in Fig. 6 is the cross sectional illustration of the fourth example of dual electric machinery rotors of this invention, in which the cross sectional illustration along A-A' is the same as in Fig. 2, to which are installed two sets of electro-magnetic field F100' and F100" and two sets of electric machinery rotors R100' and R100" and two sets of electric machinery rotating shafts S100' and S100"; in between the two sets of electric machinery rotors R100' and R100" and housing H100 there is installed rotary driving bearing B100, centrifugal pulling mechanism FCD100' and FCD100" are individually installed between housing H100 and the two electric machinery rotors R100' and R100", and the two electric machinery rotating shafts S100' and S100" are constituted of two independent electric machinery rotating shafts, and for the centrifugal pulling mechanism FCD100' and FCD100" there are installed individual centrifugal weight FW500, and to the centrifugal weight FW500 there is installed the pivotal joint structure SC500 for the connection to movable arms A500 on both sides, each centrifugal weight FW500 of which one of the side is connected to the movable arm A500, to which is connected to fixing seat (or the fixing seat which is the body extension of electric machinery rotor structure) C300' and C300" of the pivotal joint structure SC500 so as to be connected to electric machinery rotor R100' and R100", the other side of each individual centrifugal weight FW500 is through the help of circular washer WS100' and WS100" and through B200' and B200" coupled to the fixing seats C200' and C200" connected to the pivotal joint structure SC500 and connected to housing H100, and further to form a rotary coupling with motor coupling and with axial resisting force function; in between the two sets of fixing seats C300' and C300"" and two sets of circular washer WS100' and WS100" there are installed pre-stressed springs SP100' and SP100", and depending on the need there can selectively installed axial position limiting structures between the two sets of electric machinery rotating shafts, and between each electric machinery rotors R100' and R100" and their respective coupling electric machinery rotating shafts S100' and S100", there is installed plum-flower-shaped shaft or any other similar shaft for axial displacement key way structure SL100, or further in between the groove-like linear interactive bodies there are installed ball bearing or roller bearing structures, with the help of centrifugal pulling mechanism FCD100' and FCD100" whose centrifugal force changes depending on the rotor speed and with the help of axial pre-stressed spring SP1000' and SP100", individually driving the electric machinery rotors R100' and R100" to produce axial modulating displacement;
   Or as illustrated in Fig. 7 is the cross sectional illustration of the fifth example of dual electric machinery rotors of this invention, in which the cross sectional illustration of A-A' is the same as in Fig. 2, to which are installed two sets of electro-magnetic fields F100' and F100" and two sets of electric machinery rotors R100' and R100", and constituted of a single common electric machinery rotating shaft S100", and by using the two sets of centrifugal pulling mechanisms FCD100' and FCD100" to individually coupled in between the two electric machinery rotors R100' and R100" and motor shell H100, and for the centrifugal pulling mechanism FCD100' and FCD100" there are installed individual centrifugal weight FW500, and to the centrifugal weight FW500 there is installed the pivotal joint structure SC500 for the connection of movable arm A500 on both sides, each centrifugal weight FW500 of which one of the side is connected to the movable arm A500, to which is connected to fixing seat (or the fixing seat which is the body extension of electric machinery rotor structure) C300' and C300" of the pivotal joint structure SC500 so as to be connected to electric machinery rotors R100' and R100", the other side of each individual centrifugal weight FW500 is through the help of circular washer WS100' and WS100" and through B200' and B200" coupled to the fixing seat C200' and C200" connected to the pivotal joint structure SC500 and connected to housing H100, and further to form a rotary coupling with motor coupling and with axially resisting force functions; whereas between each individual electric machinery rotors R100' and R100" and their respective coupling electric machinery rotating shaft S100"', there are installed plum-flower shaped shaft or any other key way structures SL100 for the axial displacement, or further in between the groove-like linear interactive bodies there are installed ball bearing or roller bearing structures, so as to make use of the centrifugal pulling mechanism FCD100' and FCD100" and installed between the circular washer WS100' and WS100" and the fixing seats C200' and C200" are the axial pre-stressed springs SP100' and SP100" which drives electric machinery rotors R100' and R100" to produce axial modulating displacement;
   In the afore mentioned Fig. 7 of realization example, further as shown in Fig. 8 between the common rotating shaft of the electric machinery S100"' and the electric machinery rotor R100', there is reserved an installation of plum-flower shape axis or any other key way structures SL100, or further in between the groove-like linear interactive bodies there are installed ball bearing or roller bearing structures, whereas with electric machinery rotor R100" the connection is direct, so as to make use of the actions of single common centrifugal pulling mechanism FCD100"' and pre-stressed spring SP100"', to singularly drive the electric machinery rotor R100' to produce axially modulated displacement; Fig. 8 shows in the realization whereas between one side of the electric machinery rotor and the common electric machinery rotary shaft an axial displacement control is possible, and the other set between the electric machinery rotor and the common electric machinery rotary shaft an axial displacement control is not possible and is fixed structure, where the cross sectional illustration along A-A' is the same as Fig. 2;
   As illustrated in Fig. 9 is the cross sectional illustration of the sixth example of dual electric machinery rotors of this invention, in which the cross sectional illustration along A-A' is the same as in Fig. 2, which is from the realization example in Fig. 6, in between the two sets of independent rotating shaft S100' and S100" of the electric machinery can further be installed two sets of electro-magnetic fields F100' and F100" and two sets of electric machinery rotors R100' and R100", and between the rotating shaft of the electric machinery S100' and S100" can selectively install controllable clutch CL100; whereas the controllable clutch includes electrical, or magnetic, or mechanical, or human, or fluid, or any other operable means of power to control the transmission structure, including frictional or let-in type clutch or centrifugal clutch, etc., for rotary dynamics transmission or breaking function clutches; so as to perform separate independent driving or connecting common driving between the two sets of electric machinery rotors R100' and R100" driving electric machinery rotating shaft S100' and S100" ;
(3) As illustrated in Fig. 10 is the cross sectional illustration of the seventh example of dual electric machinery rotors of this invention, in which the cross sectional illustration along A-A' is the same as in Fig. 2, to which are installed two sets of electro-magnetic fields F100' and F100" and two sets of rotating shaft S100' and S100" of the electric machinery, and there are installed two sets of electric machinery R100' and R100" exhibiting serial common structure as shown in the realization example in Fig. 3, to which between its electric machinery rotating shaft S100' and S100" there is installed a controllable clutch CL100; the controllable clutch CL100 includes electrical, or magnetic, or mechanical, or human, or fluid, or any other operable means of power to control the transmission structure, including frictional or let-in type clutch or centrifugal clutch, etc., for rotary dynamics transmission or breaking function clutches, so as to produce individual independent driving or connected common driving for the electric machinery rotating shafts S100' and S100'' which are driven by the two sets of electric machinery rotors R100' and R100";
(4) As illustrated in Fig. 11 is the cross sectional illustration of the eighth example of dual electric machinery rotors of this invention, in which the cross sectional illustration along A-A' is the same as in Fig. 2, to which are installed two sets of electro-magnetic field F100' and F100" and two sets of rotating shafts S100' and S100" of the electric machinery, and with two sets of serial common structures as the realization example shown in Fig. 4, and between the two rotating shafts of the electric machinery of the two sets of electric machinery rotors R100' and R100" there is installed controllable clutch CL100; the controllable clutch CL100 includes electrical, or magnetic, or mechanical, or human, or fluid, or any other operable means of power to control the transmission structure, including frictional or let-in type clutch or centrifugal clutch, etc., for rotary dynamics transmission or breaking function clutches, so as to perform individual independent driving or connected common driving for the electric machinery rotating shafts S100' and S100" which are driven by the two sets of electric machinery rotors R100' and R100";
(5) As illustrated in Fig. 12 is the cross sectional illustration of the eighth example of dual electric machinery rotors of this invention, in which the cross sectional illustration along A-A' is the same as in Fig. 2, to which are installed two sets of electro-magnetic field F100' and F100" and two sets of rotating shaft S100' and S100" of the electric machinery, are two sets of serial common structures as realized in the example shown in Fig. 5, and between the two electric machinery rotating shafts of the two sets of the electric machinery rotors R100' and R100" there is installed the controllable clutch CL100; the controllable clutch CL100 includes electrical, or magnetic, or mechanical, or human, or fluid, or any other operable means of power to control the transmission structure, including frictional or let-in type clutch or centrifugal clutch, etc., for rotary dynamics transmission or breaking function clutches, so as to perform individual independent driving or connected common driving for the rotating shafts S100' and S100" of the electric machinery which are driven by the two sets of electric machinery rotors R100' and R100";
(6) This invention can be the rotating machine with a structure of two electric machinery rotors and individual or common electric machinery magnetic field, with the two electric machinery rotors consist of two sets of same or mixture of different structures as shown in Figs. 1 through 12;
(7) This invention can be the rotating machine with a structure of two electric machinery rotors and individual or common electric machinery magnetic field, with one of the two electric machinery rotors consist of one of the different structures shown in Figs. 1 through 5, and the other electric machinery rotor is consist of the common electric machinery rotor which does not produce axial displacement or other structure which can produce axial activation displacement.

In order to suit the application needs, as described previously this invention can be two common structure rotating electric machinery with dual electric machinery rotors and individual or common electric machinery magnetic field, including both are electric generators or both are electric motors, or one is a generator and the other is a motor.

This rotor axial activation modulation of electric machinery due to centrifugal force of which the electric machinery magnetic effect structure of the electric machinery rotor R100 and electro-magnetic field F100 includes:
(1) The axial stack height of the magnetic core of the electric machinery rotor is greater than that of the electric machinery magnetic field;
(2) The axial stack height of the magnetic core of the electric machinery rotor is equal to that of the electro-magnetic field;
(3) The axial stack height of the magnetic core of the electric machinery rotor is less than that of the electro-magnetic field.

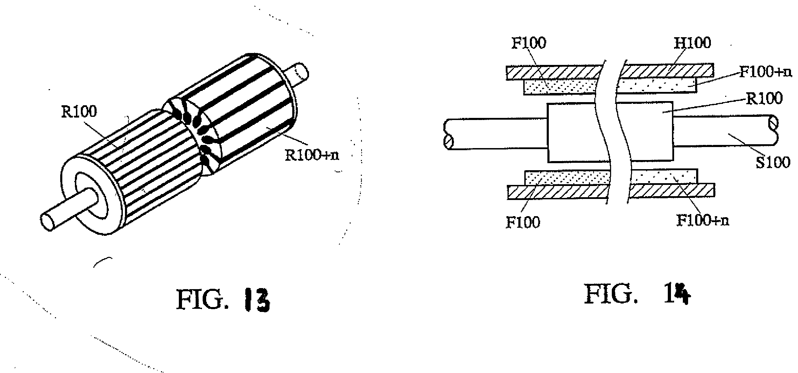

This electric machinery modulated by axially activated rotor with the use of centrifugal force of which the modulation method of the characteristics of the electric generator or electric motor that generates axial displacement between the electric machinery rotor and electro-magnetic field, including controllable voltage, current, frequency, etc. inputs versus output linear characteristics of the electric generator, and controllable motor speed, torque, synchronous or asynchronous, etc. input versus output linear characteristics of the electric motor; such structure of this rotor axial activation modulation of electric machinery due to centrifugal force includes:
(1) When the axial stack height of the magnetic core of the electric machinery rotor is greater than that of the electric machinery magnetic field, the modulation method of the electric machinery function is to make use of the magnetic poles of the electric machinery rotor and the electric machinery magnetic field in the axial corresponding displacement generated by using the centrifugal force, so as to couple the electric magnetic machinery rotor with fixed characteristics with different magnetic flux density or different gap, or different magnetic or different exciting method or any other different structure of different electric machinery physical property or electric machinery magnetic field structure of different electric machinery characteristics, so as to generate the needed operation and output characteristics of the generator or motor; for commutator type electric machinery, if the axial thickness of the magnetic poles of the electric machinery rotor is smaller than the thickness of the magnetic poles of the magnetic field of the electric machinery, the armature ARM100 of the commutator can be used together with the special axial extended commutator CM100 installed specially for axial activation control, so as to increase the coupling range with electric brush BU100, for the matching of different structure type or different electric machinery magnetic field F100"' of the different electric machinery characteristics, during the axial pulling displacement by using centrifugal pulling mechanism FCD100, in producing corresponding different electric machinery characteristics;
(3) By re-arranging the various similar or different alternating current or direct current and brush or brushless rotating electric machinery magnetic field and electric machinery rotor structure, and by selecting different axial position and size of electric machinery magnetic field and electric machinery rotor, there can be similar or different inner diameter or outer diameter, or electric machinery magnetic field or electric machinery rotor made of same or different number of poles, and same or different method of excitation, or constitute of electric machinery rotor of same or different electric machinery characteristics or structures, the desired operation and characteristics of generator or motor can be selected; these types of design and manufacturing principles are commonly known and will not be repeated here;
(4) The electric machinery rotor can be formed in one body, and during the operating state with the electric machinery in the different axial corresponding position, the working section for different axial coupling position with the electric machinery magnetic field, can be with same electric machinery characteristics or different electric machinery characteristics; and electric machinery rotor can be formed in one body or at least two electric machinery rotor structures R100∼R100+n consist of a few sectors of different electric machinery characteristics exhibiting axial overlapping; as shown in Fig. 13 is the realization example of this invention in the electric machinery rotor made of different electric machinery characteristics exhibiting axial overlapping;
(5) The electric machinery magnetic field can be formed in one body, and during the working section of different axial coupling position with the electric machinery rotor, can be with same electric machinery characteristics or different electric machinery characteristics; and electric machinery magnetic field can be formed in one body or at least two electric machinery magnetic field structures R100∼R100+n consist of a few sectors of different electric machinery characteristics presenting axial overlapping; as shown in Fig. 14 is the realization example of this invention in the electric machinery magnetic field made of different electric machinery characteristics presenting axial overlapping.

This rotor axial activation modulation of electric machinery due to centrifugal force, its electric machinery rotor and electric machinery magnetic field, of which the mechanical corresponding driving relationship of both include:
(1) External electric machinery rotor rotary electric machinery structure;
(2) Internal electric machinery rotor rotary electric machinery structure;
(3) Dual moving type in which the magnetic field structure and electric machinery rotor both are rotary.

This rotor axial activation modulation of electric machinery due to centrifugal force, its structure includes:
(1) Cylindrical rotating electric machinery structure;
(2) Cone rotating electric machinery structure.

This rotor axial activation modulation of electric machinery due to centrifugal force in the application example of electric machinery rotor R100 presenting axial displacement with electric machinery rotating shaft, its electric machinery rotor R100 due to the action of centrifugal pulling mechanism pre-stressed spring SP100, during shutting down the machine will exhibit forced regression along the axis, in order to limit the regression position, the following structures consist of axial position limiting structure D100 to position and limit the electric machinery rotor R100, it's structure includes: use a position limiting ring structure with diameter greater than the shaft to connect to the electric machinery shaft to limit the regression; as described previously in the Fig. 1; or the electric machinery rotating shaft with stepping structure, to which the section with a larger diameter is used as position limiting structure; or with a C-shape retaining ring as position limiting structure; or with a radius pin as position limiting structure; or any other commonly used axial position limiting structure with similar function.

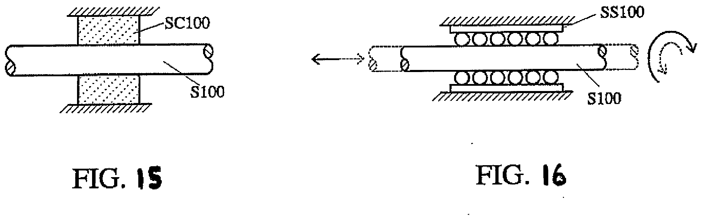

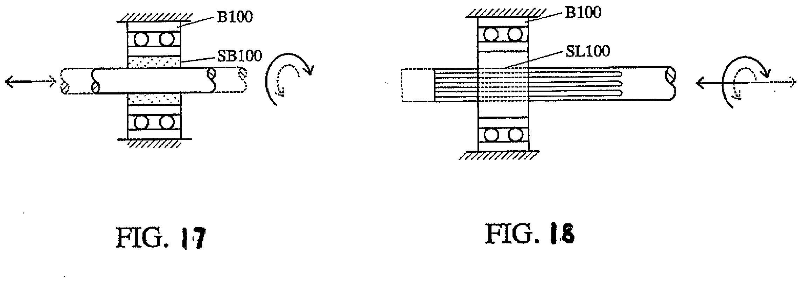

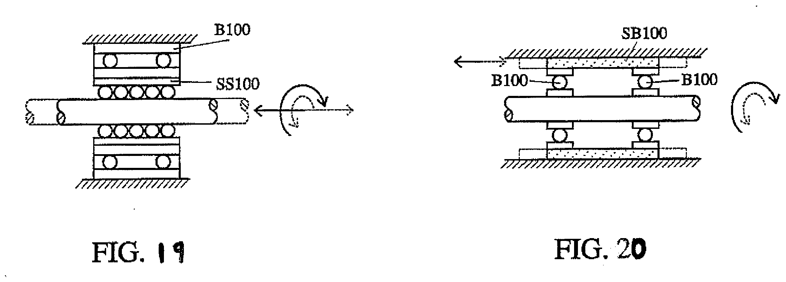

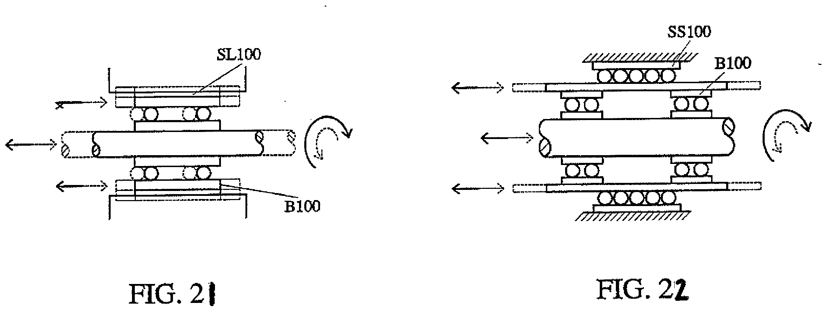

This rotor axial activation modulation of electric machinery due to centrifugal force, its structure for the rotating shaft of the electric machinery S100 to perform rotary driving and axial displacement, can be constitute of plum-flower shape shaft and corresponding plum-flower shape shaft structure, or any other key way structure that can be used for the axial displacement, or further in its ditch shape axial interactive body there is installed a ball bearing or roller bearing structure, or plum-flower shape shaft or any other key way structure SL100 for the axial displacement, exhibiting single layer structure or multiple layer structure, including:
(1) Structure consist of single axial displacement and rotary driving adaptor sleeve SC100, single layer adaptor sleeve structure for rotating shaft of the electric machinery S100 to produce axial displacement and rotary driving; Fig. 15 is the realization example of this invention in the rotating shaft of the electric machinery coupled to single axial displacement and rotary driving adaptor sleeve;
(2) The inner circular surface with belt distribution ball bearing axial bearing SS100, constituting single layer bearing structure for the axial displacement and rotary driving for the rotating shaft S100 of the electric machinery; Fig. 16 is the realization example of this invention in the electric machinery rotating shaft coupled to inner circular surface with belt distribution ball bearing axial bearing;
(3) The outer layer consists of rotary driving bearing B100 for rotary driving ball bearing or roller bearing, inner layer is multi-layer bearing structure for axial displacement and rotary driving consists of adaptor sleeve or bearing SB100 for the axial displacement and rotary driving; Fig. 17 is the realization example of this invention in the electric machinery rotating shaft with outer layer being roller bearing whereas inner layer being adaptor sleeve for the axial displacement;
(4) The outer layer consists of rotary driving bearing B100, whereas inner layer is the multi-layer bearing structure for the axial displacement and rotary driving consists of plum-flower shape shaft or other axial displacement key way structure SL100; Fig. 18 is the realization example of this invention in the rotating shaft of the electric machinery coupled with outer layer being rotary bearing whereas inner layer being multi-layer structure consists of plum-flower shape shaft or key way structure for axial displacement;
(5) The outer layer consists of rotary driving bearing B100, whereas inner layer is the multi-layer structure for the axial displacement and rotary driving consists of axial bearing SS100 for axial displacement; Fig. 19 is the realization example of this invention in the rotating shaft of the electric machinery coupled with outer layer being rotary bearing whereas inner layer being axial bearing multi-layer structure;
(6) The outer layer consists of axial displacement and rotary driving adaptor sleeve or bearing SB100 structure, whereas inner layer is multi-layer structure for axial displacement and rotary driving consists of rotary driving bearing B100; Fig. 20 is the realization example of this invention in the electric machinery rotating shaft coupled with outer layer being adaptor sleeve for axial displacement whereas inner layer being multi-layer structure for rotary bearing;
(7) The outer layer consists of plum-flower type axis or any other type of key way structure SL100 for axial displacement, whereas inner layer is the multi-layer bearing structure for axial displacement and rotary driving consist of rotary bearing driving bearing B100; Fig. 21 is the realization example of this invention in the electric machinery rotating shaft coupled with outer layer being plum flower type key way structure for axial displacement whereas inner layer being multi-layer structure for rotary bearing;
(8) The outer layer consists of axial bearing SS100, inner layer is multi-layer structure for axial displacement and rotary driving consists of rotary driving bearing B100; Fig. 22 is the realization example of this invention in the rotating shaft of the electric machinery coupled with outer layer being axial bearing whereas inner layer being multi-layer structure for rotary bearing.

## Claims

1. A rotatable electric machine comprising a rotatable shaft (S100), a rotor (R100), means for generating an electro-magnetic field (F100), a housing (H100), a pulling structure (FCD100), and a pre-stressed spring (SP100), wherein the pulling structure comprises at least one weight (FW500) installed on a pivot joint structure (SC500), the pivot joint structure having movable arms (A500) pivotally connected together, with one arm connected to a fixing seat (C300) fixed to the rotor, the arrangement being such that the or each weight and the arms are movable by the centrifugal force generated by rotation of the rotor whereby the movement of the arms pulls the rotor in the axial direction, and in that the pre-stressed spring is installed on the rotatable shaft between the fixing seats of the rotatable shaft and the rotor, whereby the spring pushes the rotor to its standstill position during deceleration of the rotor, such that, when the rotor (R100) functions as a generator or as a motor, the speed of the rotor controls the centrifugal pulling structure (FCD100) so that the centrifugal force varies according to the rotor speed, and further drives the rotor to produce axial displacement along a preset direction, so as to generate corresponding displacement, **characterised in that** the other arm of the pivot joint structure is connected to a circular washer (WS100), the washer being coupled through a bearing (B200) to a fixing seat (C100, C200) which is fixed to the housing (H100).

2. A machine as claimed in claim 1, further comprising a bearing or an adaptor sleeve (B100, SB100) installed between the rotatable shaft (S100) and the housing (H100).

3. A machine as claimed in claim 2, whereby axial positioning of the adaptor sleeve or bearing (SB100) permits axial displacement and a rotating driving function of the shaft, and the centrifugal pulling structure (FCD100) is installed between the rotor (R100) and the connected shaft (S100), or between the rotor (R100) and the housing (H100), or between the shaft (S100) and the housing (H100); so that, when the rotor (R100) and the means for generating an electro-magnetic field (F100) are performing a generator function or a motor function, depending on the speed of the rotor which controls the centrifugal pulling structure (FCD100) and so varies the centrifugal force, the rotor is driven to produce corresponding axial displacement along a preset direction, and so produces corresponding generator or corresponding motor operation characteristics with the generated electro-magnetic field (F100).

4. A machine as claimed in any one of claims 1 to 3, further comprising a rotatable transmission and axial displacement structure (SL100) installed between the rotor (R100) and the shaft (S100).

5. A machine as claimed in claim 4, wherein a plum-flower shape shaft or any other key-way structure constitutes the rotatable transmission and axial displacement structure (SL100).

6. A machine as claimed in any one of claims 1 to 5, further comprising an axial position limiting structure (D100) associated with the rotatable shaft (S100), such that, when the rotor (R100) functions as a generator or as a motor, the speed of the rotor controls the centrifugal pulling structure (FCD100) so that the centrifugal force varies according to the rotor speed, and further drives the rotor to produce axial displacement along a preset directions, so as to generate corresponding settings of generator or motor characteristics between the rotor and the means for generating an electro-magnetic field (F100).

7. A machine as claimed in claim 4, further comprising an integrated housing (H100) for installing individual means for generating electromagnetic fields (F100', F100"), wherein the electric machine comprises two individual rotors (R100' and R100") and the shaft (S100) comprises two shafts (S100' and S100"), each of the rotors being connected to its respective rotatable shaft (S100' and S100") and its respective centrifugal pulling mechanism (FCD100', FCD100") by a respective rotatable transmission and a respective axial displacement structure (SL100).

8. A machine as claimed in claim 7, wherein the two rotors (R100', R100") are respectively coupled to two means for generating electro-magnetic fields (F100', and F100"), the rotary bearing (B100) is installed between the shafts (S100' and S100") of the two rotors and the housing (H100), and the machine is provided with a respective centrifugal pulling mechanism (FCD100' and FCD100") for pulling each of the rotors to produce axial displacement.

9. A machine as claimed in claim 8, wherein each centrifugal pulling mechanism (FCD100' and FCD100") has an individual centrifugal weight (FW500) and an associated pivotal joint structure (SC500) for the connection to the movable arms (A500) on both sides.

10. A machine as claimed in claim 3, wherein the electric machine comprises two individual rotors (R100' and R100") and the shaft (S100) comprises two shafts (S100' and S100"), each of the rotors being connected to a respective rotatable shaft, and the rotatable and axial displacement adaptor sleever or bearing (SB100) is installed between the rotatable shafts (S100' and S100") and the housing (H100).

11. A machine as claimed in claim 7, further comprising additional electrical, magnetic, mechanical, or fluid means between the two shafts (S100', S100") to control the transmission structure.

12. A machine as claimed in claim 11, wherein said additional means are constituted by controllable clutches (CL100) such that the two rotors (R100', R100") can operate jointly or separately.

13. A machine as claimed in claim 10, wherein the electric machine comprises two means for generating electro-magnetic fields (F100' and F100") wherein the two rotors (R100', R100") are respectively coupled to two means for generating electro-magnetic fields, the rotary bearing (B100) is installed between the shafts (S100' and S100") and the housing (H100), and the machine is provided with a respective centrifugal pulling mechanism (FCD100' and FCD 100") for pulling each of the rotors to produce axial displacement, wherein the machine further comprises a controllable clutch (CL100) between the two shafts (S100', S100") to control the transmission structure such that the two rotors (R100', R100") can operate jointly or separately.

14. A machine as claimed in claim 1, wherein the axial stack height of the magnetic core of the rotor is greater than that of the means for generating an electro-magnetic field (F100) .

## Patentansprüche

1. Drehbare elektrische Maschine, umfassend eine drehbare Welle (S100), einen Rotor (R100), Mittel zum Erzeugen eines elektromagnetischen Feldes (F100), ein Gehäuse (H100), eine Zugstruktur (FCD100) und eine vorgespannte Feder (SP100), wobei die Zugstruktur mindestens ein Gewicht (FW500) umfasst, das an einer Gelenkverbindungsstruktur (SC500) installiert ist, wobei die Gelenkverbindungsstruktur bewegliche Arme (A500) aufweist, die schwenkbar miteinander verbunden sind, wobei ein Arm mit einem an dem Rotor fixierten Fixierungssitz (C300) verbunden ist, wobei die Anordnung derart ist, dass das bzw. jedes Gewicht und die Arme durch die Fliehkraft bewegbar sind, welche durch die Drehung des Rotors erzeugt wird, wodurch die Bewegung der Arme den Rotor in der axialen Richtung zieht, und dass die vorgespannte Feder zwischen den Fixierungssitzen der drehbaren Welle und dem Rotor auf der drehbaren Welle installiert ist, wodurch die Feder den Rotor während der Abbremsung des Rotors in dessen Stillstandsposition schiebt, so dass, wenn der Rotor (R100) als ein Generator bzw. als ein Motor funktioniert, die Drehzahl des Rotors die zentrifugale Zugstruktur (FCD100) steuert, so dass die Fliehkraft entsprechend der Rotordrehzahl variiert, und ferner den Rotor antreibt, um eine axiale Verschiebung entlang einer vorgegebenen Richtung zu erzeugen, damit eine entsprechende Verschiebung erzeugt wird, **dadurch gekennzeichnet, dass** der andere Arm der Gelenkverbindungsstruktur mit einer kreisförmigen Scheibe (WS100) verbunden ist, wobei die Scheibe durch ein Lager (B200) an einen Fixierungssitz (C100, C200) gekoppelt ist, der an dem Gehäuse (H100) fixiert ist.

2. Maschine nach Anspruch 1, ferner umfassend ein Lager bzw. eine Adapterhülse (B100, SB100), das bzw. die zwischen der drehbaren Welle (S100) und dem Gehäuse (H100) installiert ist.

3. Maschine nach Anspruch 2, wobei die axiale Positionierung der Adapterhülse bzw. des Lagers (SB100) die axiale Verschiebung und eine Rotationsantriebsfunktion der Welle ermöglicht, und die zentrifugale Zugstruktur (FCD100) zwischen dem Rotor (R100) und der verbundenen Welle (S100) installiert ist, oder zwischen dem Rotor (R100) und dem Gehäuse (H100), oder zwischen der Welle (S100) und dem Gehäuse (H100); so dass, wenn der Rotor (R100) und die Mittel zum Erzeugen eines elektromagnetischen Feldes (F100) eine Generatorfunktion oder eine Motorfunktion ausführen, der Rotor, in Abhängigkeit von der Drehzahl des Rotors, welche die zentrifugale Zugstruktur (FCD100) steuert und damit die Fliehkraft variiert, angetrieben wird, um eine entsprechende axiale Verschiebung entlang einer vorgegebenen Richtung zu erzeugen, und somit entsprechende Generator- oder entsprechende Motoroperationseigenschaften mit dem erzeugten elektromagnetischen Feld (F100) erzeugt.

4. Maschine nach einem der Ansprüche 1 bis 3, ferner umfassend eine drehbare Übertragungs- und axiale Verschiebungsstruktur (SL100), die zwischen dem Rotor (R100) und der Welle (S100) installiert ist.

5. Maschine nach Anspruch 4, wobei eine pflaumenblütenförmige Welle oder eine beliebige andere Keilnutstruktur die drehbare Übertragungs- und axiale Verschiebungsstruktur (SL100) bildet.

6. Maschine nach einem der Ansprüche 1 bis 5, ferner umfassend eine der drehbaren Welle (S100) zugehörige Axialpositionsbegrenzungsstruktur (D100), so dass, wenn der Rotor (R100) als ein Generator oder als ein Motor funktioniert, die Drehzahl des Rotors die zentrifugale Zugstruktur (FCD100) steuert, so dass die Fliehkraft entsprechend der Rotordrehzahl variiert, und ferner den Rotor antreibt, um eine axiale Verschiebung entlang einer vorgegebenen Richtung zu erzeugen, damit entsprechende Einstellungen von Generator- oder Motoreigenschaften zwischen dem Rotor und den Mitteln zum Erzeugen eines elektromagnetischen Feldes (F100) erzeugt werden.

7. Maschine nach Anspruch 4, ferner umfassend ein integriertes Gehäuse (H100) für die Installation individueller Mittel zum Erzeugen elektromagnetischer Felder (F100', F100"), wobei die elektrische Maschine zwei individuelle Rotoren (R100' und R100") umfasst und die Welle (S100) zwei Wellen (S100' und S100") umfasst, wobei jeder der Rotoren durch eine jeweilige drehbare Übertragungs- und axiale Verschiebungsstruktur (SL100) mit seiner jeweiligen drehbaren Welle (S100' und S100") und seinem jeweiligen zentrifugalen Zugmechanismus (FCD100', FCD100") verbunden ist.

8. Maschine nach Anspruch 7, wobei die beiden Rotoren (R100', R100") jeweils an zwei Mittel zum Erzeugen elektromagnetischer Felder (F100' und F100") gekoppelt sind, wobei das Drehlager (B100) zwischen den Wellen (S100' und S100") der beiden Rotoren und dem Gehäuse (H100) installiert ist und die Maschine mit einem jeweiligen zentrifugalen Zugmechanismus (FCD100' und FCD100") zum Ziehen von jedem der Rotoren ausgestattet ist, um axiale Verschiebung zu erzeugen.

9. Maschine nach Anspruch 8, wobei jeder zentrifugale Zugmechanismus (FCD100' und FCD100") ein individuelles zentrifugales Gewicht (FW500) und eine zugehörige Gelenkverbindungsstruktur (SC500) zur Verbindung der beweglichen Arme (A500) auf beiden Seiten aufweist.

10. Maschine nach Anspruch 3, wobei die elektrische Maschine zwei individuelle Rotoren (R100' und R100") umfasst und die Welle (S100) zwei Wellen (S100' und S100") umfasst, wobei jeder der Rotoren mit einer jeweiligen drehbaren Welle verbunden ist und die Adapterbuchse bzw. das Lager (SB100) zur drehbaren und axialen Verschiebung zwischen den drehbaren Wellen (S100' und S100") und dem Gehäuse (H100) installiert ist.

11. Maschine nach Anspruch 7, ferner umfassend zusätzliche elektrische, magnetische, mechanische oder Fluidmittel zwischen den beiden Wellen (S100', S100") zur Steuerung der Übertragungsstruktur.

12. Maschine nach Anspruch 11, wobei die zusätzlichen Mittel durch steuerbare Kupplungen (CL100) gebildet werden, so dass die beiden Rotoren (R100', R100") gemeinsam oder getrennt arbeiten können.

13. Maschine nach Anspruch 10, wobei die elektrische Maschine zwei Mittel zum Erzeugen elektromagnetischer Felder (F100' und F100") umfasst, wobei die beiden Rotoren (R100', R100") jeweils mit zwei Mitteln zum Erzeugen elektromagnetischer Felder gekoppelt sind, das Drehlager (B100) zwischen den Wellen (S100' und S100") und dem Gehäuse (H100) installiert ist und die Maschine mit einem jeweiligen zentrifugalen Zugmechanismus (FCD100' und FCD100") zum Ziehen von jedem der Rotoren ausgestattet ist, um axiale Verschiebung zu erzeugen, wobei die Maschine ferner eine steuerbare Kupplung (CL100) zwischen den beiden Wellen (S100', S100") zur Steuerung der Übertragungsstruktur umfasst, so dass die beiden Rotoren (R100', R100") gemeinsam oder getrennt arbeiten können.

14. Maschine nach Anspruch 1, wobei die axiale Stapelhöhe des Magnetkerns des Rotors größer ist als die der Mittel zum Erzeugen eines elektromagnetischen Feldes (F100).

## Revendications

1. Machine électrique rotative comprenant un arbre rotatif (S100), un rotor (R100), des moyens destinés à générer un champ électromagnétique (F100), un boîtier (H100), une structure de traction (FCD100) et un ressort précontraint (SP100), la structure de traction comprenant au moins un poids (FW500) installé sur une structure d'articulation rotoïde (SC500), la structure d'articulation rotoïde comprenant des bras mobiles (A500) reliés entre eux de manière pivotante, un bras étant relié à un siège de fixation (C300) fixé au rotor, l'agencement étant tel que le ou les poids et les bras peuvent être déplacés par la force centrifuge générée par la rotation du rotor, le mouvement des bras tirant ainsi le rotor dans la direction axiale, et tel que le ressort précontraint est installé sur l'arbre rotatif entre les sièges de fixation de l'arbre rotatif et le rotor, le ressort poussant le rotor jusqu'à sa position d'arrêt durant la décélération du rotor, de telle sorte que, lorsque le rotor (R100) fonctionne comme un générateur ou un moteur, la vitesse du rotor commande la structure de traction centrifuge (FCD100) de sorte que la force centrifuge varie conformément à la vitesse du rotor et entraîne en outre le rotor pour produire un déplacement axial le long d'une direction prédéterminée, afin de générer un déplacement correspondant, **caractérisée en ce que** l'autre bras de la structure d'articulation rotoïde est reliée à une rondelle circulaire (WS100), la rondelle étant couplée par l'intermédiaire d'un palier (B200) à un siège de fixation (C100, C200) qui est fixé au boîtier (H100).

2. Machine selon la revendication 1, comprenant en outre un palier ou un manchon adaptateur (B100, SB100) installé entre l'arbre rotatif (S100) et le boîtier (H100).

3. Machine selon la revendication 2, le positionnement axial du manchon adaptateur ou du palier (SB100) permettant le déplacement axial et une fonction d'entraînement en rotation de l'arbre et la structure de traction centrifuge (FCD100) est installée entre le rotor (R100) et l'arbre relié (S100), ou entre le rotor (R100) et le boîtier (H100), ou entre l'arbre (S100) et le boîtier (H100) ; de sorte que, lorsque le rotor (R100) et les moyens destinés à générer un champ électromagnétique (F100) exécutent une fonction de générateur ou une fonction de moteur, en fonction de la vitesse du rotor qui commande la structure de traction centrifuge (FCD100) faisant ainsi varier la force centrifuge, le rotor soit entraîné pour produire un déplacement axial correspondant le long d'une direction prédéterminée, produisant ainsi des caractéristiques de fonctionnement correspondantes du générateur ou du moteur avec le champ électromagnétique (F100) généré.

4. Machine selon l'une quelconque des revendications 1 à 3, comprenant en outre une structure de transmission rotative et de déplacement axial (SL100) installée entre le rotor (R100) et l'arbre (S100).

5. Machine selon la revendication 4, dans laquelle un arbre en forme de fleur de prunier ou toute autre structure de rainure constitue la structure de transmission rotative et de déplacement axial (SL100).

6. Machine selon l'une quelconque des revendications 1 à 5, comprenant en outre une structure de limitation de position axiale (D100) associée à l'arbre rotatif (S100), de telle sorte que, lorsque le rotor (R100) fonctionne comme un générateur ou un moteur, la vitesse du rotor commande la structure de traction centrifuge (FCD100) de sorte que la force centrifuge varie en fonction de la vitesse du rotor et entraîne en outre le rotor pour produire un déplacement axial le long de directions prédéterminées, afin de générer des paramètres correspondants des caractéristiques du générateur ou du moteur entre le rotor et les moyens destinés à générer un champ électromagnétique (F100).

7. Machine selon la revendication 4, comprenant en outre un boîtier intégré (H100) destiné à l'installation des moyens individuels permettant de générer des champs électromagnétiques (F100', F100"), la machine électrique comprenant deux rotors individuels (R100' et R100") et l'arbre (S100) comprenant deux arbres (S100' et S100"), chacun des rotors étant relié à son arbre rotatif respectif (S100' et S100") et à son mécanisme de traction centrifuge (FCD100', FCD100") respectif au moyen d'une structure de transmission rotative respective et de déplacement axial respectif (SL100).

8. Machine selon la revendication 7, dans laquelle les deux rotors (R100', R100") sont respectivement couplés à deux moyens permettant de générer des champs électromagnétiques (F100' et F100"), le palier rotatif (B100) est installé entre les arbres (S100' et S100") des deux rotors et le boîtier (H100), et la machine est dotée d'un mécanisme de traction centrifuge (FCD100' et FCD100") respectif permettant de tirer chacun des rotors afin de produire un déplacement axial.

9. Machine selon la revendication 8, dans laquelle chaque mécanisme de traction centrifuge (FCD100' et FCD100") dispose d'un contrepoids individuel (FW500) et d'une structure d'articulation rotoïde (SC500) associée permettant de relier les bras mobiles (A500) des deux côtés.

10. Machine selon la revendication 3, dans laquelle la machine électrique comprend deux moteurs individuels (R100' et R100") et l'arbre (S100) comprend deux arbres (S100' et S100"), chacun des rotors étant relié à un arbre rotatif respectif, et le manchon adaptateur ou le palier rotatif et à déplacement axial (SB100) est installé entre les arbres rotatifs (S100' et S100") et le boîtier (H100).

11. Machine selon la revendication 7, comprenant en outre des moyens électriques, magnétiques, mécaniques ou fluidiques supplémentaires entre les deux arbres (S100', S100") pour commander la structure de transmission.

12. Machine selon la revendication 11, dans laquelle lesdits moyens supplémentaires sont constitués d'embrayages pouvant être commandés (CL100) de sorte que les deux rotors (R100', R100") puissent fonctionner conjointement ou séparément.

13. Machine selon la revendication 10, dans laquelle la machine électrique comprend deux moyens destinés à générer des champs électromagnétiques (F100' et F100"), dans laquelle les deux rotors (R100', R100") sont couplés respectivement à deux moyens permettant de générer des champs électromagnétiques, le palier rotatif (B100) est installé entre les arbres (S100' et S100") et le boîtier (H100), et la machine est dotée d'un mécanisme de traction centrifuge (FCD100' et FCD100") respectif permettant de tirer chacun des rotors afin de produire un déplacement axial, la machine comprenant en outre un embrayage pouvant être commandé (CL100) entre les deux arbres (S100', S100") pour commander la structure de transmission de sorte que les deux rotors (R100', R100") puissent fonctionner conjointement ou séparément.

14. Machine selon la revendication 1, dans laquelle la hauteur d'empilement axial du noyau magnétique du rotor est supérieure à celle des moyens permettant de générer un champ électromagnétique (F100).
